# DEMANDE DE BREVET EUROPEEN

(11) **EP 2 388 501 A1**
(43) Date de publication de la demande: **23.11.2011**
(21) Numéro de dépôt: 10305531.5
(22) Date de dépôt: 19.05.2010
(51) Int. Cl.: F16L 29/04, F24F 1/00, F25B 41/00

(54) **Connecteur pour tuyaux de raccordement de système de climatisation et appareil de climatisation associé**

(71) Demandeur: Star Light, 06000 Nice (FR)
(72) Inventeur: Mazigh, Patrice, 06000 Nice (FR)
(74) Mandataire: Decobert, Jean-Pascal

(57) **Abrégé**

La présente invention concerne un connecteur de tuyau de circuit de climatisation comprenant une première partie et une deuxième partie destinées à coopérer de sorte à prendre alternativement une position connectée et une position déconnectée, caractérisé par le fait que la première partie comprend un premier corps longitudinal (3) ménageant un passage traversant recevant une soupape (5) mobile, la soupape (5) est munie d'au moins un moyen d'étanchéité (7) assurant l'étanchéité par défaut avec le premier corps longitudinal (3) au moins en position déconnectée, caractérisé par le fait que la deuxième partie comprend un deuxième corps longitudinal (4) ménageant un passage traversant un manchon (9) mobile et un piston (6), le manchon (9) est placé au moins partiellement dans le deuxième corps longitudinal (4) et reçoit le piston (6) muni d'au moins un moyen d'étanchéité (8) assurant l'étanchéité avec le manchon (9), le manchon (9) comprend au moins deux joints (10) dont l'un au moins est destiné à assurer l'étanchéité permanente avec le deuxième corps longitudinal (4) et dont l'un au moins est destiné à assurer l'étanchéité avec le premier corps (3) lorsque le connecteur est en position connectée.
La présente invention a pour but d'éviter toute phase de purge vers l'atmosphère lors de l'installation.

## Description

L'invention concerne un connecteur pour relier les tuyaux d'un système de climatisation.

L'invention trouvera son utilisation pour l'interconnexion hermétique sous pression pour le montage d'appareils de climatisation notamment pour des appareils de type bi-blocs muraux.

Une méthode conventionnelle pour installer un climatiseur de sorte à expulser l'air de l'unité intérieure et l'air dans les tuyaux de connexion après l'installation consiste à charger en gaz réfrigérant la partie principale de l'unité extérieure jusqu'à un volume en excès par rapport au volume spécifié requis pour l'utilisation de la fonction air conditionné du dispositif. Cet excès de gaz réfrigérant permet de purger l'air présent dans le reste du circuit. On utilise à cet effet une valve deux voies au niveau de l'unité extérieure de sorte qu'une fois que l'installation est terminée la circulation du gaz réfrigérant expulse l'air dans l'atmosphère. Ce procédé traditionnel est particulièrement dommageable pour l'environnement puisqu'il induit un dégazage de gaz réfrigérant dans l'atmosphère particulièrement nuisible notamment par la destruction de la couche d'ozone.

On a donc cherché à proposer des dispositifs évitant de telles fuites de gaz réfrigérant dans l'atmosphère. En ce sens, une fois la connexion entre les unités intérieure et extérieure faite de façon traditionnelle par une liaison en cuivre qui se raccorde à l'unité intérieure et à l'unité extérieure par un écrou à serrer sur un filetage, il faut une intervention d'un frigoriste pour limiter les risques de dégazage dans l'atmosphère et éviter le tirage au vide de l'installation. Cette étape nécessite non seulement l'intervention d'un professionnel qualifié mais aussi l'emploi d'un matériel adéquat et souvent coûteux pour le pompage. En outre, les risques de dégazage ne sont en tout état de cause pas totalement supprimés.

La présente invention permet de remédier en tout ou partie aux inconvénients des dispositifs jusqu'à présent et propose un connecteur pour tuyaux de circuit de climatisation. Le connecteur permet d'être fermé hermétiquement jusqu'à sa mise en connexion définitive. De cette façon, l'étanchéité parfaite est prévue de par la conception du connecteur y compris lors de phases de démontage pour éviter tout dégazage dans l'atmosphère.

La prévention de dégazage étant réalisée de façon automatique par le connecteur selon l'invention, il ne nécessite pas l'intervention de professionnels qualifiés et simplifie grandement les étapes d'installation.

D'autres buts et avantages apparaîtront au cours de la description qui suit d'un mode de réalisation préféré de l'invention cependant non limitatif.

Auparavant, il est rappelé que la présente invention concerne un connecteur de tuyau de circuit de climatisation comprenant une première partie et une deuxième partie destinées à coopérer de sorte que le connecteur soit alternativement en une position connectée ou en une position déconnectée, caractérisé par le fait que la première partie comprend un premier corps longitudinal ménageant un passage traversant recevant une soupape mobile, la soupape est munie d'au moins un moyen d'étanchéité assurant l'étanchéité par défaut avec le premier corps longitudinal au moins en position déconnectée et que la deuxième partie comprend un deuxième corps longitudinal ménageant un passage traversant, un manchon mobile et un piston, le piston est placé au moins partiellement dans le manchon placé lui-même au moins partiellement dans le deuxième corps longitudinal et le piston est muni d'au moins un moyen d'étanchéité assurant l'étanchéité par défaut avec le manchon, le manchon comprend au moins deux joints dont l'un au moins est destiné à assurer l'étanchéité permanente avec le deuxième corps longitudinal lorsque le connecteur est en position déconnectée et connectée et dont l'un au moins est destiné à assurer l'étanchéité avec le premier corps lorsque le connecteur est en position connectée.

Selon une variante préférée de l'invention, ce connecteur est tel que :
- le premier corps longitudinal comprend une butée interne contre laquelle la soupape est destinée à être en contact par défaut au moins lorsque le connecteur est en position déconnectée.
- le manchon est destiné à être en contact avec la butée interne lorsque le connecteur est en position connectée.
- le piston est configuré pour être en contact avec la soupape lorsque le connecteur est en position connectée.
- il comprend un moyen de serrage destiné à rapprocher la première partie et la deuxième partie.
- le serrage des moyens de serrage entraîne :
   ■ le déplacement de la soupape relativement au premier corps longitudinal par poussée du piston supprimant l'étanchéité de la soupape et,
   ■ le déplacement du manchon relativement au piston supprimant l'étanchéité entre le piston et le manchon de sorte à permettre la circulation du flux entre la première et la deuxième partie.
- le manchon et la soupape ont un déplacement en sens opposé.
- il comprend un ressort destiné à maintenir la soupape en contact étanche avec le premier corps longitudinal lorsque le connecteur est en position déconnectée.
- le piston est fixe relativement au deuxième corps longitudinal au moyen d'une bague de maintien sur laquelle le piston est fixé.
- il comprend un élément élastique placé entre la bague de maintien et le manchon de sorte à maintenir le contact contre la butée interne du premier corps longitudinal lorsque le connecteur est en position connectée

L'invention concerne également un appareil de climatisation comportant une unité extérieure et au moins une unité intérieure, les unités extérieure et intérieure présentant respectivement un circuit extérieur empli d'un gaz réfrigérant et un circuit intérieur, les deux circuits étant reliés par un connecteur tel que décrit ci-dessus.

Les dessins ci-joints sont donnés à titre d'exemples et ne sont pas limitatifs de l'invention. Ils représentent seulement un mode de réalisation de l'invention et permettront de la comprendre aisément.

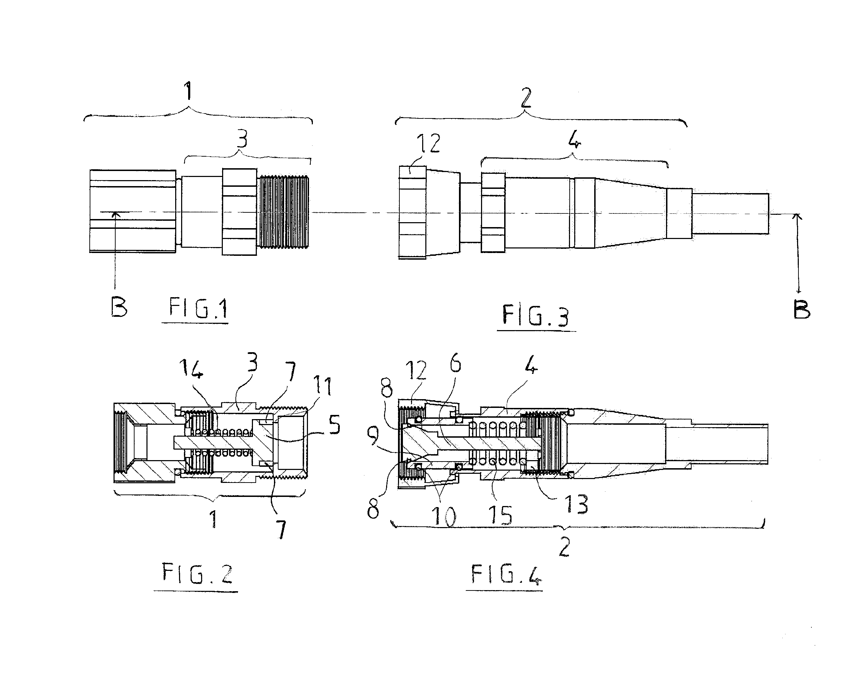

La figure 1 est une vue de la première partie du connecteur.
La figure 2 est une vue en coupe BB de la première partie du connecteur selon la figure 1.
La figure 3 est une vue de la deuxième partie du connecteur.
La figure 4 est une vue en coupe BB de la deuxième partie du connecteur selon la figure 3.

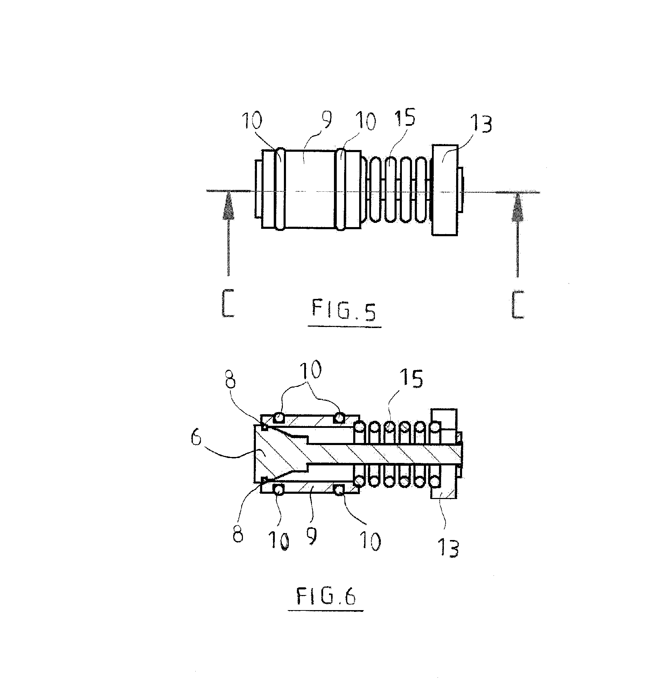

La figure 5 est une vue du manchon d'étanchéité selon l'invention.
La figure 6 est une vue en coupe CC selon la figure 5 du manchon d'étanchéité.
La figure 7 est une vue du connecteur connecté sans circulation du fluide.
La figure 8 est une vue en coupe du connecteur selon la figure 7.
La figure 9 est une vue du connecteur avec la première partie et la deuxième partie connectées avec circulation du fluide.
La figure 10 est une vue en coupe AA du connecteur selon la figure 9.
La figure 11 est une vue de détail selon la figure 10.
La figure 12 illustre un mode de réalisation d'un appareil de climatisation selon l'invention.

L'invention concerne un connecteur de raccordement pour les tuyaux de climatisation. On entend par tuyau, une canalisation ou un conduit qui peut être souple ou rigide et destinée à l'écoulement d'un fluide, liquide, gaz, etc.

Le connecteur selon l'invention comprend une première partie 1 préférentiellement destinée à être connectée à une unité extérieure 16 d'un appareil de climatisation et une deuxième partie 2 destinée à être préférentiellement connectée à une unité intérieure 17 d'un appareil de climatisation.

La première partie 1 et la deuxième partie 2 sont destinées à coopérer de sorte à permettre le raccordement des tuyaux auxquels elles sont fixées.

Lorsque la première partie 1 et la deuxième partie 2 sont connectées, le connecteur est en position connectée. Inversement, lorsque la première partie 1 et la deuxième partie 2 sont déconnectées, le connecteur est en position déconnectée.

La première partie 1 comprend un premier corps longitudinal 3 ménageant un passage traversant permettant l'écoulement du fluide. Le premier corps longitudinal 3 comprend dans le passage traversant une soupape mobile 5 fermée par défaut. La soupape 5 est munie d'au moins un moyen d'étanchéité 7 assurant l'étanchéité par défaut avec le premier corps longitudinal 3 au moins lorsque le connecteur est en position déconnectée.

On entend par position déconnectée que la première partie 1 et la deuxième partie 2 du connecteur ne sont pas raccordées il n'y a pas de passage de fluide. A l'inverse, on entend par position connectée, lorsque la première partie 1 et la deuxième partie 2 du connecteur sont raccordées qu'il y ait ou non possibilité de passage du fluide.

Préférentiellement, le premier corps longitudinal 3 comprend une butée interne 11 contre laquelle la soupape 5 est destinée à être en contact par défaut.

La soupape 5 est maintenue fermée par défaut au moyen d'un élément élastique tel qu'un ressort disposé entre la soupape 5 et préférentiellement le premier corps longitudinal 3. Avantageusement, la butée interne 11 est formée dans le premier corps longitudinal 3 dans sa partie proximale 20, c'est-à-dire à l'extrémité destinée à être raccordée à la deuxième partie 2 du connecteur. De manière similaire, l'extrémité proximale de la deuxième partie 2 est celle destinée à être raccordée à la première partie 1.

Selon cette disposition représentée sur l'ensemble des figures, la soupape 5 comprend une tête sur laquelle sont positionnés les moyens d'étanchéité 7 qui sont en contact par défaut avec la surface distale de la butée interne 11, préférentiellement au moyen d'un ressort 14 disposé au niveau d'une tige de la soupape 5. La surface distale de la butée interne 11 est constituée par la surface faisant face à l'extrémité distale de la première partie 1.

Ainsi, lorsque la première partie 1 est montée sur l'unité extérieure 16, il n'y a pas de risque d'introduction de gaz ou d'humidité, ou de perdre l'effet de vide réalisé au niveau de l'unité extérieure 16.

La deuxième partie 2 du connecteur selon l'invention comprend un deuxième corps longitudinal 4 ménageant un passage traversant permettant l'écoulement du fluide. Dans le passage traversant est placé un manchon mobile 9 et un piston 6. Le manchon 9 est avantageusement placé au moins partiellement dans le deuxième corps longitudinal 4 et reçoit le piston 6.

Préférentiellement, le piston 6 est muni d'au moins un moyen d'étanchéité assurant l'étanchéité par défaut avec le manchon 9. Préférentiellement, cette étanchéité est réalisée au niveau de l'extrémité proximale de la deuxième partie 2.

Selon l'invention, le manchon 9 comprend au moins deux joints 10. Au moins un joint 10 est destiné à assurer l'étanchéité par défaut entre le deuxième corps longitudinal 4 et le manchon 9. Au moins un autre joint 10 est quant à lui destiné à assurer l'étanchéité avec le premier corps longitudinal 3 lorsque la première partie 1 et la deuxième partie 2 sont raccordées.

Lorsque la première partie 1 et la deuxième partie 2 sont déconnectées, la deuxième partie 2 est hermétique et ne permet pas la sortie du gaz réfrigérant en dehors de l'unité intérieure 17.

Selon un mode préféré de l'invention, le piston 6 et la butée interne 11 sont configurés pour ne pas entrer en contact. Le piston 6 est configuré pour coopérer avec la soupape 5. Selon le mode de réalisation représenté, le piston 6 a un diamètre inférieur à celui du passage formé par la butée interne 11.

De même, le manchon 9 est configuré pour entrer en contact avec la butée interne 11.

Le connecteur selon l'invention comprend avantageusement un moyen de serrage 12 permettant lors du raccordement de la première partie 1 et de la deuxième partie 2 de les rapprocher et de les maintenir en position. Selon une possibilité préférée, le rapprochement est progressif.

Préférentiellement, et tel que représenté sur l'ensemble des figures, ce moyen de serrage 12 est constitué d'éléments mâle/femelle de filetage.

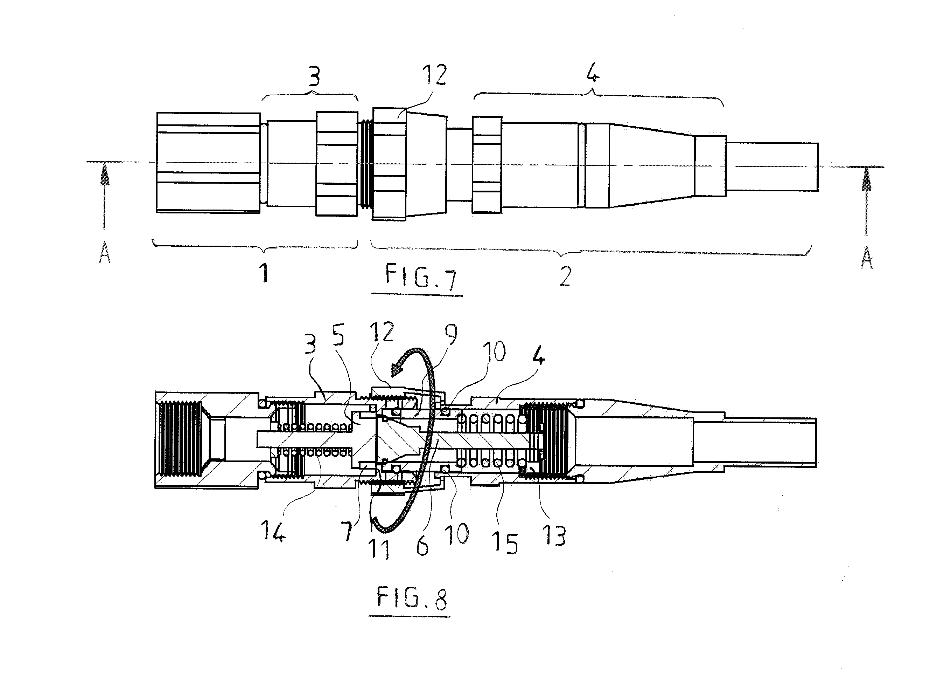

Ces éléments de filetage sont mis en coopération et vissés progressivement. Au-delà d'une certaine profondeur de vissage, le piston 6 vient en appui sur la soupape 5. De même, le manchon 9 vient en contact avec la butée interne 11. Préférentiellement, le manchon 9 entre en contact par son extrémité proximale avec la surface proximale de la butée interne 11. A ce stade, représenté aux figures 7 et 8, bien que la première partie 1 et la deuxième partie 2 du connecteur soient raccordées, la profondeur de vissage de l'élément de serrage n'est pas suffisante de ce fait la soupape 5 et le piston 6 sont toujours fermés par défaut. De plus, à cette étape, le manchon 9 est par au moins un des ses joints 10 apte à réaliser l'étanchéité avec la première partie 1.

Ainsi, aux figures 7 et 8, le flux de fluide ne circule pas encore entre la première partie 1 et la deuxième partie 2 du connecteur. L'étanchéité entre la première partie 1 et la deuxième partie 2 est d'ores et déjà réalisée par le manchon 9.

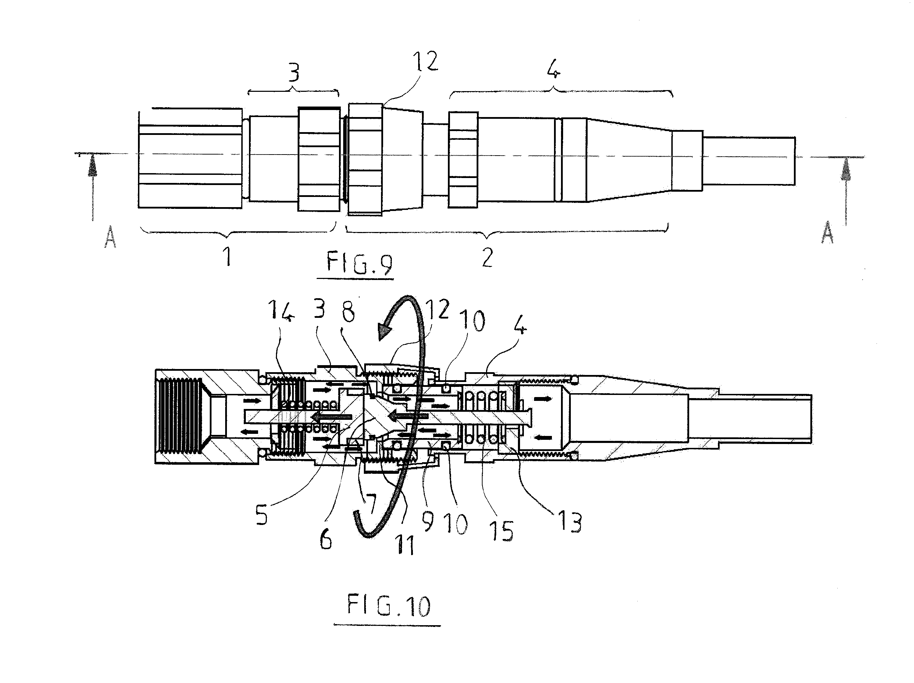

En poursuivant le vissage des moyens de serrage, le piston 6 génère un mouvement de recul de la soupape 5 en direction de l'extrémité distale de la première partie 1 supprimant ainsi l'étanchéité entre la soupape 5 et la butée interne 11. De même, ce mouvement éloigne le piston 6 et le manchon 9 et supprime l'étanchéité entre le piston 6 et le manchon 9. Cette étape est représentée en figures 9 à 11. Il y a donc circulation du fluide entre la première partie 1 et la deuxième partie 2 tout en ayant une étanchéité parfaite entre la première partie 1 et la deuxième partie 2 grâce au manchon 9 et à ses joints 10.

Le manchon 9 et la soupape 5 ont un déplacement en sens opposé.

A l'inverse, au démontage, lorsque les moyens de serrage sont désolidarisés, la soupape 5 et le piston 6 sont fermés pour rétablir l'étanchéité de la première partie 1 et de la deuxième partie 2 avant que l'étanchéité entre la première partie 1 et la deuxième partie 2 soit supprimée.

La disposition de la présente invention permet lors du vissage des moyens de serrage 12 de maintenir constamment l'étanchéité entre la première partie 1 et la deuxième partie 2 du fait du déplacement simultané du manchon 9, élément constituant de la deuxième partie 2 et de la première partie 1. En effet, l'appui entre la butée interne 11 et le manchon 9 est constant et perpétuel lors du vissage des moyens de serrage 12.

Selon un mode de réalisation, le piston 6 est monté fixe sur le deuxième corps longitudinal 4 préférentiellement au moyen d'une bague de maintien 13. La tige du piston 6 est montée fixe au niveau de la bague de maintien 13. La bague de maintien est placée au niveau de l'extrémité distale de la deuxième partie 2.

Selon une possibilité, le positionnement du piston 6 peut être contrôlé en fonction du positionnement de la bague de maintien 13.

De manière additionnelle, il est avantageux d'utiliser une bague de maintien 13 constituant une butée pour un élément élastique tel qu'un ressort 15 destiné à être positionné entre la bague de maintien 13 et le manchon 9 de sorte à le maintenir partiellement en dehors du deuxième corps longitudinal 4.

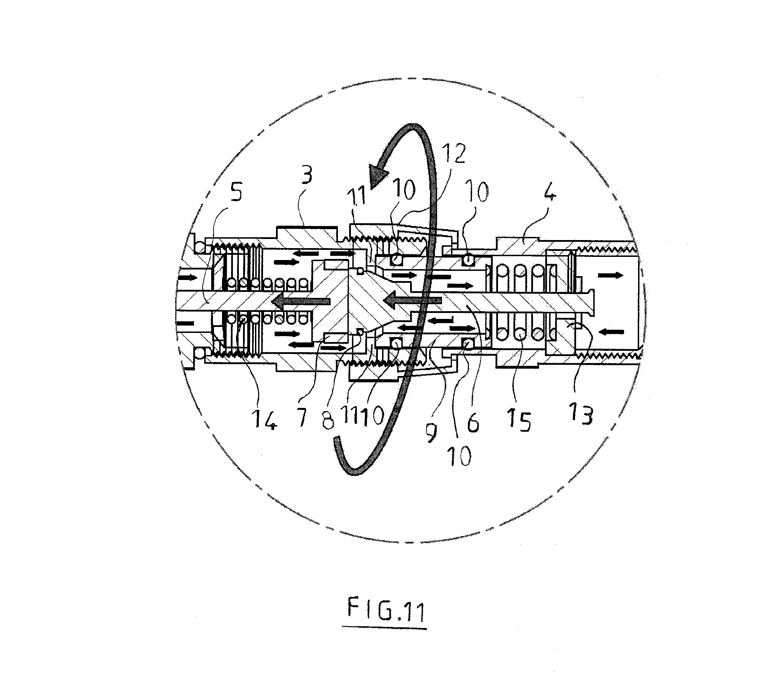

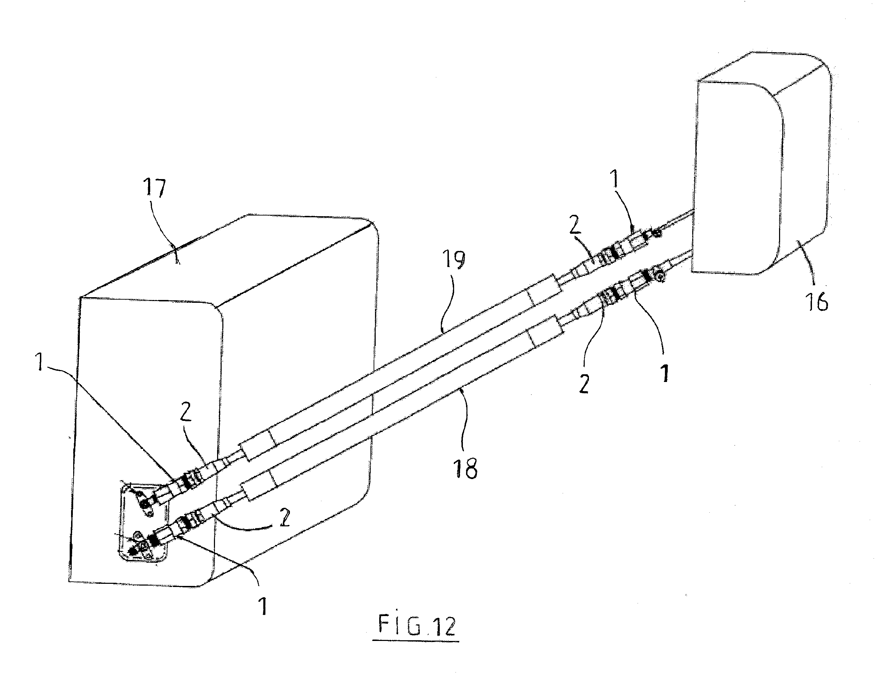

La figure 12 donne un exemple de montage d'un appareil de climatisation comportant le connecteur selon l'invention. Un appareil de climatisation selon l'invention comprend donc une unité extérieure 16 destinée à être positionnée à l'extérieur du volume à climatiser. Généralement, l'unité extérieure 16 comporte des moyens de convexion forcée disposant d'un ventilateur ainsi qu'un circuit, circuit extérieur dans lequel circule un gaz réfrigérant. En sortie et en entrée du circuit extérieur, des vannes sont généralement disposées de sorte à assurer la fermeture du circuit lors des phases de montage et de démontage. L'appareil comprend d'autre part une unité intérieure 17, par exemple constituée d'un bloc mural apte à souffler de l'air à température sélectionnée dans le volume à climatiser. A cet effet, l'unité intérieure 17 comporte un circuit, circuit intérieur, pour la circulation du gaz réfrigérant. Les circuits intérieur et extérieur sont raccordés par des tuyaux 18, 19 de raccordement illustrés également en figure 11. Avantageusement, les extrémités des tuyaux de raccordement 18, 19 sont munis de la deuxième partie 2 d'un connecteur selon l'invention. De manière additionnelle, la première partie 1 du connecteur selon l'invention est montée respectivement sur l'unité extérieure 16 et l'unité intérieure 17. Le connecteur selon l'invention permet d'éviter toute manipulation du gaz réfrigérant sur des machines préchargées en gaz (le gaz est contenu dans le compresseur de l'unité extérieure 16) et évite une mise en service qui consiste en l'extraction du gaz, le tirage au vide et la réintroduction du gaz. On interdit par conséquent tout risque de dégazage lié à de mauvaises manipulations ou à un défaut de matériel.

### REFERENCES

- 1.: Première partie
- 2.: Deuxième partie
- 3.: Premier corps longitudinal
- 4.: Deuxième corps longitudinal
- 5.: Soupape
- 6.: Piston
- 7.: Moyen d'étanchéité de la soupape
- 8.: Moyen d'étanchéité du piston
- 9.: Manchon
- 10.: Joints
- 11.: Butée interne
- 12.: Moyen de serrage
- 13.: Bague de maintien
- 14.: Ressort de soupape
- 15.: Ressort de piston
- 16.: Unité extérieure
- 17.: Unité intérieure
- 18.: Tuyau
- 19.: Tuyau

## Revendications

1. Connecteur de tuyau de circuit de climatisation comprenant une première partie (1) et une deuxième partie (2) destinées à coopérer de sorte que le connecteur soit alternativement dans une position connectée ou une position déconnectée
**caractérisé par le fait que**
la première partie (1) comprend un premier corps longitudinal (3) ménageant un passage traversant recevant une soupape (5) mobile, la soupape (5) est munie d'au moins un moyen d'étanchéité (7) assurant l'étanchéité par défaut avec le premier corps longitudinal (3) au moins en position déconnectée, et que la deuxième partie (2) comprend un deuxième corps longitudinal (4) ménageant un passage traversant, un manchon (9) mobile et un piston (6), le piston (6) est placé au moins partiellement dans le manchon (9) placé au moins partiellement dans le deuxième corps longitudinal (4) et le piston (6) est muni d'au moins un moyen d'étanchéité (8) assurant l'étanchéité par défaut avec le manchon (9), le manchon (9) comprend au moins deux joints (10) dont l'un au moins est destiné à assurer l'étanchéité permanente avec le deuxième corps longitudinal (4) dont l'un au moins est destiné à assurer l'étanchéité avec le premier corps (3) lorsque le connecteur est en position connectée.

2. Connecteur selon la revendication 1 dans lequel le premier corps longitudinal (3) comprend une butée interne (11) contre laquelle la soupape (5) est destinée à être en contact par défaut au moins lorsque le connecteur est en position déconnectée.

3. Connecteur selon la revendication 2 dans lequel le manchon (9) est destiné à être en contact avec la butée interne (11) lorsque le connecteur est en position connectée.

4. Connecteur selon l'une quelconque des revendications précédentes dans lequel le piston (6) est configuré pour être en contact avec la soupape (5) lorsque le connecteur est en position connectée.

5. Connecteur selon l'une quelconque des revendications précédentes comprenant un moyen de serrage (12) destiné à rapprocher la première partie (1) et la deuxième partie (2).

6. Connecteur selon la revendication 5 dans lequel le serrage des moyens de serrage (12) entraîne :
- le déplacement de la soupape (5) relativement au premier corps longitudinal (3) par poussée du piston supprimant l'étanchéité de la soupape (5) et,
- le déplacement du manchon (9) relativement au piston (6) supprimant l'étanchéité entre le piston et le manchon de sorte à permettre la circulation du flux entre la première (1) et la deuxième partie (2).

7. Connecteur selon la revendication précédente dans lequel le manchon (9) et la soupape (5) ont un déplacement en sens opposé.

8. Connecteur selon l'une quelconque des revendications précédentes comprenant un ressort (14) destiné à maintenir la soupape (5) en contact étanche avec le premier corps longitudinal (3) lorsque le connecteur est en position déconnectée.

9. Connecteur selon l'une quelconque des revendications précédentes dans lequel le piston (6) est fixe relativement au deuxième corps longitudinal (4) au moyen d'une bague de maintien (13) sur laquelle le piston (6) est fixé.

10. Connecteur selon la revendication précédente comprenant un élément élastique placé entre la bague de maintien (13) et le manchon (9) de sorte à maintenir le contact contre la butée interne (11) du premier corps longitudinal (3) lorsque le connecteur est en position connectée.

11. Appareil de climatisation comportant une unité extérieure (16) et au moins une unité intérieure (17), les unités extérieure (16) et intérieure (17) présentant respectivement un circuit extérieur empli d'un gaz réfrigérant et un circuit intérieur, les deux circuits étant reliés par un connecteur selon l'une quelconque des revendications 1 à 10.
